Europäisches Patentamt

**European Patent Office**

**Office européen des brevets**

(19)

(11) Numéro de publication : **0 006 052**

**B1**

(12)     **FASCICULE DE BREVET EUROPÉEN**

(45) Date de publication du fascicule du brevet :
**21.01.81**

(21) Numéro de dépôt : **79400328.5**

(22) Date de dépôt : **23.05.79**

(51) Int. Cl.³ : **G 02 B   5/172, G 03 C   5/00**

(54) **Structure optique compacte à source intégrée.**

(30) Priorité : **26.05.78 FR 7815794**

(43) Date de publication de la demande :
**12.12.79 (Bulletin 79/25)**

(45) Mention de la délivrance du brevet :
**21.01.81 Bulletin 81/03**

(84) Etats contractants désignés :
**DE GB NL SE**

(56) Documents cités :
**FR - A - 2 083 418**
**1975 IEEE INTERCON CONFERENCE RECORD,**
**tenue de 8-10 avril 1975 à**
**New York city, N.Y. (USA)**
**J. E. FULENWIDER : « Some Potential**
**Impacts of Optical Fiber Transmission**
**and Integrated Optics on World Communications »**
**pages 5/5-1 à 5/5-6**
**APPLIED OPTICS, volume 15, n° 2**
**février 1976**
**NEW YORK (USA)**
**W. J. TOMLINSON et al. « Multicomponent**
**Photopolymer systems for volume phase**
**holograms and grating devices »**
**pages 534-541**

(73) Titulaire : **"THOMSON-CSF"**
**173, Boulevard Haussmann**
**F-75360 Paris Cedex 08 (FR)**

(72) Inventeur : **Huignard, Jean-Pierre**
**"THOMSON-CSF" - SCPI 173, bld Haussmann**
**75360 Paris Cedex 08 (FR)**
Inventeur : **Leclerc, Pierre**
**"THOMSON-CSF" - SCPI 173, bld Haussmann**
**75360 Paris Cedex 08 (FR)**
Inventeur : **Carballes, Jean-Claude**
**"THOMSON-CSF" - SCPI 173, bld Haussmann**
**75360 Paris Cedex 08 (FR)**
Inventeur : **Nappo, Armand**
**"THOMSON-CSF" - SCPI 173, bld Haussmann**
**75360 Paris Cedex 08 (FR)**

(74) Mandataire : **Lepercque, Jean et al**
**"THOMSON-CSF" - SCPI 173, Bld. Haussmann**
**F-75360 Paris Cedex 08 (FR)**

Imprimerie Jouve, 17, rue du Louvre, 75001 Paris, France

Structure optique compacte à source intégrée.

L'invention se rapporte aux dispositifs optiques compacts et a plus particulièrement pour objet une structure optique compacte dans laquelle la source est intégrée et qui comporte de plus des structures diffractantes inscrites à la surface d'un guide d'onde plan associé à la source.

Une structure optique compacte à source intégrée comportant une source à semiconducteur intégrée destinée à émettre une onde optique, une plaquette comportant un substrat, et une couche guide d'onde au contact avec une face de ce substrat est connue de part la conférence de FULENWIDER parue dans la publication U.S. « 1975 IEEE INTERCON CONFERENCE RECORD », NEW YORK CITY, 8-10 avril 1975, pages 5/5-2 à 5/5-6.

L'invention se propose de fournir une telle structure dans laquelle une source mono-mode de faible encombrement et de longueur d'onde bien définie est associée à un guide d'onde plan à la surface duquel des structures diffractantes réalisant des fonctions optiques telles que séparation de lumière, déviation de lumière, lentille, réflexion de lumière peuvent être inscrites, se prêtant particulièrement bien à de nombreuses applications dans le domaine des télécommunications optiques, du stockage d'informations à deux états ou de l'interférométrie. Dans le domaine de l'interférométrie, il est par exemple possible de réaliser un gyromètre à effet SAGNAC ou un hydrophone, toutes les fonctions optiques passives nécessaires dans de telles applications pouvant être intégrées dans une même couche à la surface d'un guide d'onde plan. Pour cela le guide d'onde est une couche de photopolymère sensibilisée dans le domaine visible, déposée sur un substrat à la surface duquel est prévue une couche de silice, les fonctions optiques étant inscrites soit à la surface de la couche de photopolymère par photoinduction de variations d'indice avant la polymérisation totale qui rend le photopolymère transparent, soit par photosensibilisation locale dans des couches de résine photosensible déposées à la surface de la couche de photopolymère, la résine étant ensuite développée pour former une structure diffractante en relief à la surface du guide d'onde.

L'invention sera mieux comprise et d'autres caractéristiques apparaîtront à l'aide de la description qui suit en référence aux figures annexées :

les figures 1 et 2 représentent en coupe un premier et un second modes de réalisation d'une structure optique compacte à source intégrée suivant l'invention ;

la figure 3 représente en plan le second mode de réalisation de la structure selon l'invention ;

la figure 4 représente en plan un troisième mode de réalisation de la structure suivant l'invention, ayant la même structure que celui représenté en liaison avec les figures 2 et 3 ;

la figure 5 représente un autre mode de réalisation de la structure suivant l'invention ;

la figure 6 représente un gyromètre interférométrique utilisant la structure optique compacte suivant l'invention ;

la figure 7 représente un hydrophone utilisant la même structure ;

la figure 8 représente un multiplexeur de porteuses optiques de longueur d'onde différentes utilisant cette même structure ;

la figure 9 représente le mode de photoinduction d'une structure photoinduite focalisante ;

la figure 10 représente une structure optique compacte selon l'invention utilisant une telle structure focalisante ;

la figure 11 représente une structure optique compacte selon l'invention comportant une structure photoinduite assurant la déflexion du rayonnement.

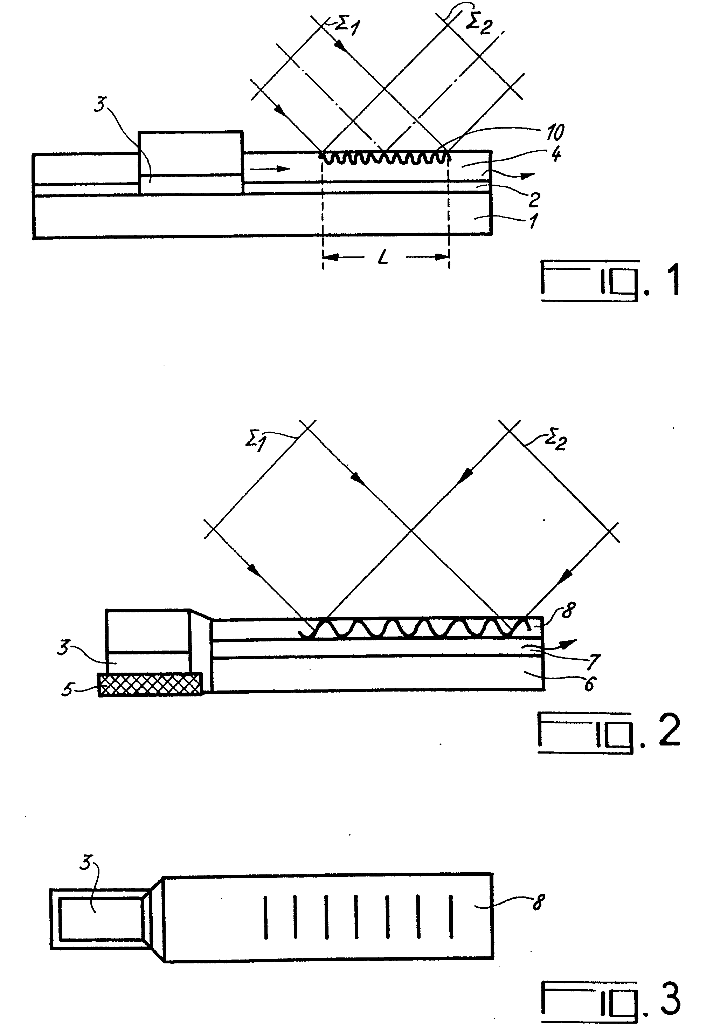

La figure 1 représente un premier mode de réalisation d'une structure optique compacte suivant l'invention. Elle comporte une plaquette formée d'un substrat, le substrat comportant un support 1 constitué par exemple de silicium et une couche de silice 2. La couche 2 est déposée sur le support 1 par croissance épitaxiale, puis cette couche est enlevée, chimiquement par exemple, dans une zone destinée à recevoir une source lumineuse à semiconducteur 3. Cette source peut être une diode électroluminescente ou un laser à semiconducteur, AsGa par exemple, qui sera soudée sur le silicium par soudure à l'indium. Une couche de matériau photopolymère 4 est déposée sur la couche de silice. Le matériau photopolymère utilisé est tel que des variations d'indice peuvent y être photoinduites par exposition à un rayonnement de longueur d'onde comprise dans la gamme 0,4 à 0,55 $\mu$m, par exemple un rayonnement issu d'un laser à Argon (0,51 $\mu$m). L'épaisseur de la couche de photopolymère est de l'ordre de quelques micromètres et cette couche forme à la fois guide de lumière pour le rayonnement issu de la source à semiconducteur après polymérisation et support pour l'inscription par photoinduction des fonctions optiques utiles dans la structure, intégrées par holographie sous forme de strates photoinduites. Pour cela, la couche de photopolymère est soumise avant polymérisation aux interférences entre deux ondes issues du même laser extérieur. Par exemple, si comme représenté sur la figure 1, la structure à intégrer est un résonateur 10 à associer à une jonction semiconductrice pour former un laser à semiconducteur à résonateur extérieur 10, la fonction optique à intégrer sur le support photopolymère est un réseau de traits parallèles, orthogonaux à la direction d'émission des photons par la jonction. Seule la face de la jonction opposée à la face d'émission vers le réseau est clivée et l'effet de résonance est obtenu entre cette face clivée et le réseau fonctionnant, par réflexion de l'onde guidée. Pour cela le pas $\Lambda$ du réseau est choisi en fonction de la longueur d'onde $\lambda$ des photons émis dans le photopolymère de telle manière $\Lambda = \lambda/2n$ où n est l'indice du photopolymère. Pour créer un tel réseau dans la couche au moyen d'un laser à Argon de longueur d'onde $\lambda o = 450$ nm, l'indice du photopolymère étant 1,5, et la longueur d'onde des photons émis par le laser AsGa étant $\lambda = 900$ nm, il faut que le pas des strates soit $\Lambda = 300$ nm, c'est-à-dire que l'angle d'incidence $\theta$ des deux ondes planes $\sum_1$ et $\sum_2$ interférant dans le photopolymère soit tel que $\sin \theta = \lambda o/2\Lambda$, soit 48°. La longueur L du résonateur est choisie pour que l'on obtienne dans la couche une efficacité de diffraction par réflexion élevée et une finesse spectrale également élevée. Par exemple, pour obtenir une efficacité de diffraction de 96 % à la longueur d'onde de la source à semiconducteur avec une modulation d'indice photoinduite $\delta n = 10^{-4}$ la longueur du résonateur pourra être $L = 10$ mm et dans ce cas la largeur spectrale du rayonnement émis par un tel laser formé par la source et le résonateur sera $\Delta \lambda = 0,8$ Å.

En fait lorsque l'exposition au rayonnement destiné à créer les fonctions optiques est effectuée avant la polymérisation totale comme décrit ci-dessus, il y a polymérisation partielle et superficielle dans les zones éclairées et diffusion de monomère des zones éclairées aux zones non éclairées. Ce gradient de concentration monomère-polymère crée des variations locales d'indice qui se conservent lors de la polymérisation par éclairage uniforme incohérent ultra violet. Après cette polymérisation le photopolymère devient rigide et totalement transparent dans le domaine visible et proche infra-rouge. Son indice de réfraction étant $n = 1,5$ et celui de la couche de silice étant 1.46, l'onde issue du laser AsGa est parfaitement guidée dans la couche de photopolymère.

Dans la structure décrite ci-dessus en liaison avec la figure 1, la source est posée sur une grande face du substrat, la couche d'oxyde ayant été enlevée pour conserver une bonne résistance thermique du laser et la couche de photopolymère étant disposée ensuite de manière à venir au contact de la face émissive de la source. Il est également possible, au lieu de poser la source sur le substrat, d'amener la face émissive de la source au contact d'une petite face du substrat muni d'une couche de photopolymère de sorte que les photons émis par la source soient guidés dans la couche de photo-polymère. De plus, au lieu d'inscrire les fonctions optiques avant polymérisation, il est possible d'effectuer cette polymérisation en deux phases, l'inscription étant effectuée entre ces deux phases. La structure optique compacte représentée sur la figure 2 montre ces deux dispositions. Une telle structure comporte une jonction semiconductrice émettrice 3, munie de son dissipateur thermique 5, amenée au contact d'un substrat de silice 6. Sur ce substrat a été déposée une première couche mince de photopolymère 7, de quelques micromètres d'épaisseur. Cette couche est polymérisée par éclairage au moyen d'un rayonnement UV incohérent uniforme. Puis une seconde couche de photopolymère 8 est déposée sur la première et les fonctions optiques nécessaires, par exemple le réseau de strates parallèles précédemment décrit agissant, lors du fonctionnement, comme résonateur 10, est enregistré dans cette seconde couche. La jonction est alors convenablement positionnée par rapport au résonateur par micromanipulations. Une goutte de photopolymère assure la liaison optique et mécanique entre la face de sortie de la jonction émissive et l'entrée du guide photopolymère. L'adhérence de l'ensemble est obtenue par polymérisation par éclairage uniforme incohérent UV.

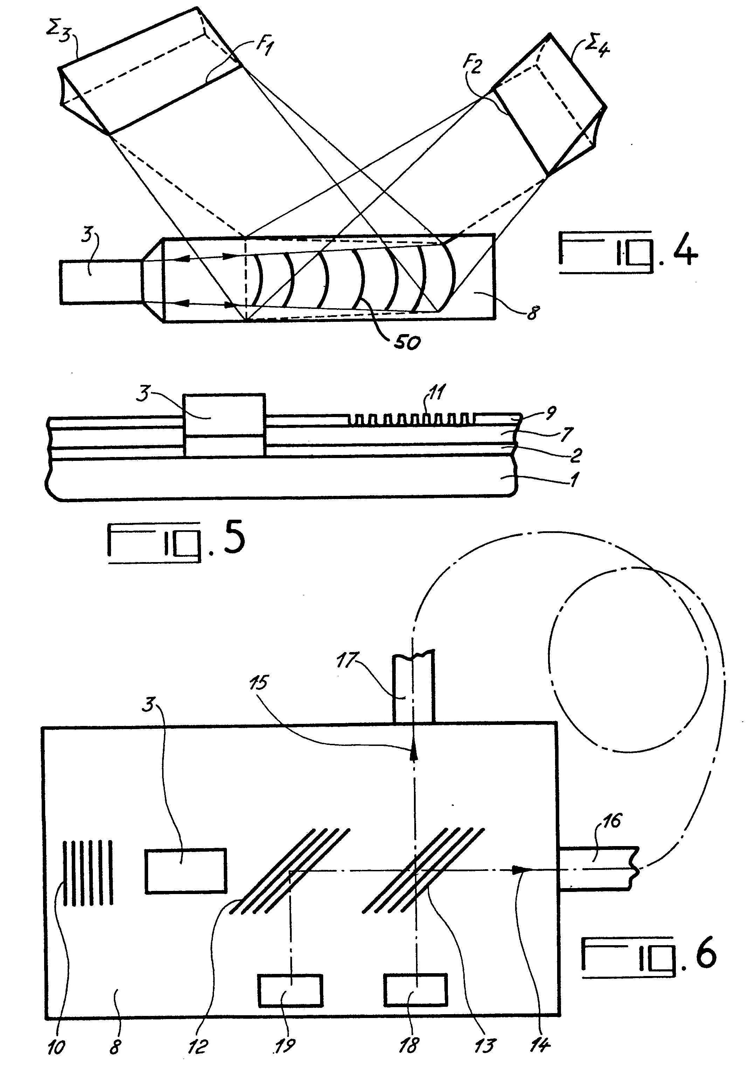

Avec les ondes $\sum_1$ et $\sum_2$ planes les strates photoinduites sont droites comme le montre la figure 3 qui est une vue de dessus de la structure optique représentée sur la figure 2. Cependant, du fait de la diffraction les pertes peuvent être importantes. Afin de réduire ces pertes, des strates 50 équidistantes mais possédant un certain rayon de courbure peuvent être photoinduites pour former le résonateur extérieur associé à la jonction semiconductrice. Une telle structure est représentée en vue de dessus sur la figure 4. Pour obtenir de telles strates photoinduites on utilise, au lieu des ondes planes $\sum_1$ et $\sum_2$, des ondes cylindriques issues par exemple de lentilles cylindriques dont les lignes focales $F_1$ et $F_2$ sont orientées dans le plan de la figure 4. Un tel dispositif comportant un résonateur formé de strates équidistantes cylindriques permet, malgré la divergence du faisceau issu de la jonction émissive, de faire fonctionner convenablement le résonateur par réflexion sur les strates cylindriques.

Dans les structures optiques compactes décrites ci-dessus, le photopolymère a été utilisé à la fois comme guide d'onde et comme support d'enregistrement des fonctions optiques, ces fonctions étant inscrites dans le photopolymère sous forme de variations d'indices photoinduites.

Il est également possible de n'utiliser le photopolymère que comme guide d'onde et d'utiliser pour l'enregistrement des fonctions optiques une couche de résine photosensible qui après enregistrement et développement formera des fonctions optiques à la surface de l'ensemble des variations de relief ou variations d'indice.

Un exemple de structure optique compacte à guide d'onde photopolymère et résine photosensible est représenté sur la figure 5 où l'on retrouve un substrat de silicium 1 sur lequel on a fait croître une couche de silice 2. La couche de silice a été enlevée dans une zone destinée à recevoir la jonction émettrice 3. Une couche de photopolymère 7 a été déposée sur la silice et exposée à un rayonnement uniforme et incohérent UV qui polymérise et rend transparente la couche 7 formant guide d'onde. Une couche de résine photosensible 9 est ensuite déposée sur la couche de photopolymère 7. Cette couche est ensuite exposée aux fronts d'onde destinés à former la figure d'interférence assurant la fonction optique nécessaire, par exemple, comme décrit précédemment, à deux fronts d'onde plans destinés à former un réseau agissant comme réflecteur fonctionnant sur le premier ordre afin de former un résonateur associé à la jonction émissive. Le développement de la couche au moyen d'un agent développant approprié permet alors de former le réseau en relief 11.

La seule fonction optique précisément décrite jusqu'à présent est la fonction résonateur, ce résonateur étant formé de strates équidistantes droites orthogonales à la direction du rayonnement émis par la jonction émissive ou formé de strates cylindriques équidistantes et agissant comme réflecteur fonctionnant sur le premier ordre de diffraction. D'autres fonctions optiques peuvent également être enregistrées dans la couche superficielle de photopolymère ou de résine photosensible. Tout d'abord, il est possible, comme représenté sur la figure 6, d'enregistrer des strates droites équidistantes mais obliques par rapport à la direction du rayonnement émis par le laser. La figure 6 représente une structure optique compacte vue de dessus ayant les caractéristiques précédemment mises en évidence destinée à former un gyromètre interférométrique. La structure de base peut être par exemple celle de la figure 1 mais avec deux couches de photopolymère déposées successivement comme décrit en liaison avec la figure 2. On trouve donc dans l'épaisseur un substrat silicium 1 une couche de silice 2, une première couche de photopolymère formant guide d'onde 7 et une couche supérieure 8 dans laquelle sont enregistrées les fonctions optiques. La source AsGa 3 est déposée sur le substrat silicium. Les structures diffractantes enregistrées comportent un résonateur 10, composé de strates orthogonales à la direction d'émission des photons, ayant une longueur telle que le rendement de diffraction soit proche de 100 %. L'ensemble formé par la source 3 ayant une face clivée et le résonateur forme une source laser AsGa. Sur le trajet du rayonnement émis par cette source sont enregistrés deux réseaux parallèles obliques 12 et 13 de longueur telle que le rendement de diffraction ne soit pas égal à 100 %. Le second réseau 13 a un rendement égal à 50 %.

Le rayonnement émis par la source et transmis par le premier réseau est partagé par le second réseau en un rayonnement transmis 14 et un rayonnement réfléchi 15. Les deux extrémités 16 et 17 d'une fibre optique enroulée sont raccordées au guide photopolymère pour capter les deux fractions du rayonnement émergeant du guide. Ces deux fractions du rayonnement sont guidées dans la fibre en sens contraire. Lorsque l'ensemble est en rotation, en même temps qu'un objet dont on souhaite mesurer la vitesse angulaire, il se crée entre les deux fractions du rayonnement émergeant aux extrémités 16 et 17 de la fibre après avoir circulé dans la fibre un déphasage qui est directement fonction de la vitesse angulaire, cette vitesse pouvant donc être mesurée par ce moyen (utilisation de l'effet SAGNAC). Pour cela le rayonnement issu de l'extrémité 17 étant partiellement réfléchi par le réseau 13 et le rayonnement issu de l'extrémité 16 étant partiellement transmis par le réseau 13 dans la même direction, un premier photodétecteur 18 recueille le rayonnement résultant des interférences crées entre ces deux parties du rayonnement reçu. Ce photodétecteur peut être une photodiode silicium obtenue par implantation dans le substrat silicium ou être un photodétecteur rapporté sur la tranche. Le photodétecteur 18 donne donc une première mesure de la vitesse angulaire par comptage des franges qui défilent sur le détecteur, le réseau de franges se déplaçant à la fréquence de battement proportionnelle à la vitesse de rotation. Le rayonnement issu de l'extrémité 17 et transmis par le réseau 13 et le rayonnement issu de l'extrémité 16 et réfléchi par le même réseau dans la même direction se combinent également et le rayonnement résultant réfléchi par le réseau 12 peut également être détecté par un détecteur 19 donnant ainsi une seconde mesure de la vitesse angulaire. Suivant la valeur de cette vitesse, l'une ou l'autre de ces deux mesures donnera une meilleure précision que l'autre. On peut noter qu'un seul réseau 13 permet de faire fonctionner le gyromètre. La structure optique compacte à source intégrée suivant l'invention permet donc de réaliser simplement un gyromètre interférométrique performant et fiable du fait de sa stabilité, aucun composant discret séparé n'étant nécessaire.

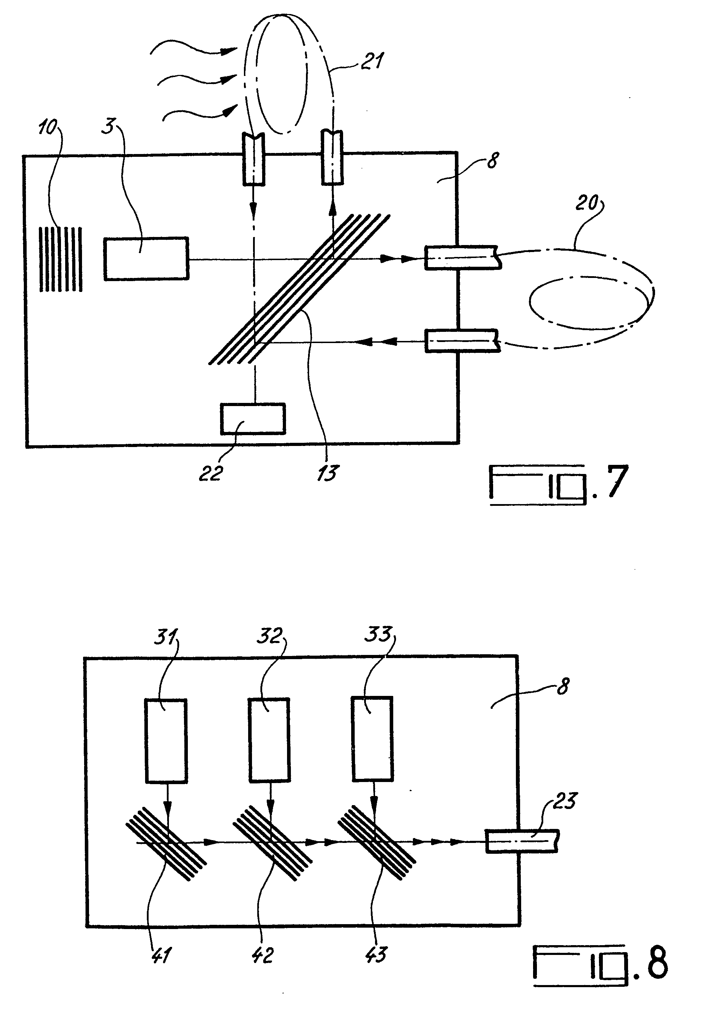

Les figures 7 et 8 représentent d'autres applications utilisant la même structure de base et les mêmes fonctions optiques.

La figure 7 représente un hydrophone en vue de dessus. La structure est la même que celle du gryomètre représenté sur la figure 6 mais avec un seul réseau 13, de même longueur, c'est-à-dire tel que le rendement de diffraction soit égal à 50 %. Ce réseau a cependant des traits plus longs car le chemin optique retour n'est pas superposé au chemin aller. La source 3 associée au résonateur 10 émet le rayonnement vers le réseau optique orienté à 45° par rapport à la direction de propagation. Le rayonnement transmis par le réseau est reçu par une extrémité d'une fibre enroulée 20 qui sera dite fibre de référence car non soumise à l'onde acoustique que l'on souhaite détecter. L'autre extrémité de la fibre enroulée 20 est également couplée au guide d'onde de la plaquette et le rayonnement après avoir parcouru la fibre optique est émis dans le guide en direction du réseau 13. A ce niveau il est partagé en un rayonnement réfléchi par le réseau qui sera le rayonnement utile et un rayonnement transmis. Le rayonnement émis par la source et réfléchi par le réseau 13 est capté par une extrémité d'une fibre enroulée 21 couplée au guide et dont l'autre extrémité est également couplée au guide. Cette fibre est soumise à une onde acoustique de fréquence $\Omega$ à détecter. Du fait de cette onde acoustique, la fibre 21 subit par effet élasto-optique une variation d'indice, de l'ordre de $10^{-6}$ à $10^{-5}$ qui se traduit par une variation de la vitesse de propagation du rayonnement dans la fibre. Les rayonnements émergeant des fibres 20 et 21 sont donc déphasés d'une quantité différente en absence et en présence d'une onde acoustique. Le réseau 13 réfléchit la moitié du rayonnement issu de la fibre 21 et transmet l'autre moitié dans la même direction que le rayonnement, réfléchi par le réseau, issu de la fibre de référence. Un détecteur 22 détecte le rayonnement résultant de la combinaison entre ce rayonnement issu de la fibre soumise à l'onde acoustique et le rayonnement issu de la fibre de référence. Cette détection met en évidence la variation de phase entre ces deux rayonnements résultant de la variation d'indice, d'où il est possible de déduire la fréquence $\Omega$ de l'onde acoustique. Un hydrophone fiable peut donc être réalisé simplement à partir de la même structure de base.

La figure 8 représente un multiplexeur en longueur d'onde utilisant également cette même structure. La plaquette toujours formée des mêmes couches successives comporte non plus une source mais 3 sources 31, 32, 33 dont on souhaite mélanger les signaux de sortie. Les sources représentées n'ont pas été munies de résonateurs extérieurs et sont des lasers à semiconducteur classiques soudés sur le substrat silicium. Les fonctions optiques intégrées dans la couche 8 de photopolymère sont des réseaux 41, 42 et 43 formés de strates obliques, à 45° de la direction d'émission des sources, et équidistantes mais ont des longueurs telles que le rendement de diffraction soit maximum. Chacun d'eux a un pas adapté à la longueur d'onde de la source correspondante si bien qu'il réfléchit presque totalement une onde de longueur d'onde adaptée mais est sans effet sur les ondes de longueurs d'onde différentes. Le rayonnement laser issu de la source 31 est donc réfléchi par le réseau 41 mais transmis sans modification par les réseaux 42 et 43. De même le rayonnement laser issu de la source 32 est réfléchi par le réseau 42 et transmis par le réseau 43 tandis que le rayonnement issu de la source 33 est réfléchi par le réseau 43. Une fibre 23 couplée au guide d'onde photopolymère reçoit donc le rayonnement issu des trois sources laser. Un dispositif analogue peut être utilisé pour démultiplexer un signal comportant plusieurs porteuses optiques de longueurs d'ondes différentes. Pour cela les sources laser sont remplacées par des détecteurs si l'on souhaite détecter ces différentes porteuses, ou bien des fibres sont couplées au guide d'onde photopolymère pour recueillir le rayonnement réfléchi sélectivement par chacun des réseaux.

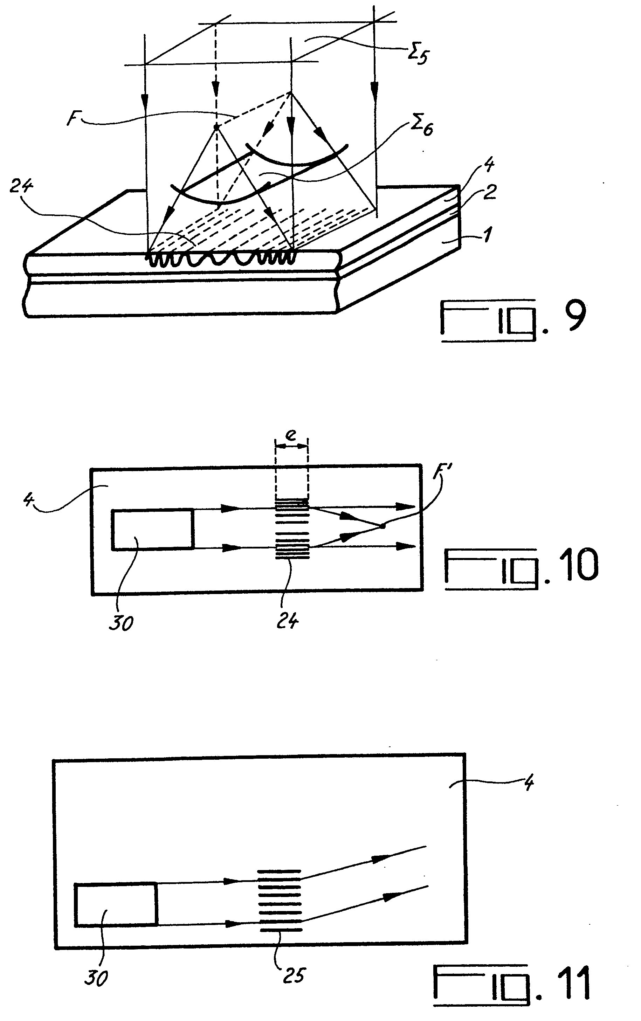

Pour d'autres applications, il peut être nécessaire de photoinduire des structures réalisant d'autres fonctions optiques par exemple la focalisation du rayonnement émis par la source. Les figures 9 et 10 représentent respectivement le mode de photoinduction de strates dans la couche superficielle destinées à produire dans le guide d'onde photopolymère la focalisation du rayonnement et une structure réalisant une telle focalisation.

Sur la figure 9 a été représenté un substrat de silicium 1 sur lequel une couche de silice 2 a été fabriquée. Une couche de photopolymère 4 est alors déposée sur la couche de silice. Les strates photoinduites pour obtenir une focalisation du faisceau sont parallèles mais non équidistantes. Leurs espacements correspondent à une répartition en zones de Fresnel. Pour cela une onde plane $\Sigma_5$ parallèle au plan de la couche est dirigée vers cette couche et interfère avec une onde cylindrique $\Sigma_6$ de même longueur d'onde et dont la ligne focale F est également parallèle au plan de la couche.

La ligne focale a une longueur déterminée en fonction de l'épaisseur e de la structure 24 à obtenir, cette épaisseur devant être assez faible pour que la structure puisse être relue par un rayonnement de longueur d'onde différente de la longueur d'onde d'enregistrement.

La figure 10 représente une structure optique compacte à source intégrée comportant une structure photoinduite 24 destinée à focaliser le rayonnement émis par la source laser à semiconducteur 30, les traits d'espacement variables de cette structure étant disposés selon la direction de propagation du rayonnement parallèle incident. Il faut noter que la position du point de focalisation F' dans le guide d'onde photopolymère par rapport à la structure 24 est fonction de la distance entre la ligne focale F et le support lors de l'enregistrement et également fonction du rapport entre la longueur d'onde du rayonnement utilisé pour l'enregistrement et la longueur d'onde du rayonnement émis par la source 30. Il faut noter que le rayonnement convergent en F' ne représente qu'une fraction du rayonnement émis par la source, ce rayonnement étant le rayonnement diffracté d'ordre 0 (à peu près 30 % du rayonnement incident). Simultanément existent des fractions du rayonnement incident correspondant aux autres ordres de diffraction.

La figure 11 représente une structure optique compacte à source intégrée comportant une structure photoinduite 25 réalisant la déflexion du rayonnement ; ce support comporte les mêmes couches que celui représenté sur les figures 1 et 9 ; la source 30 est une source laser pour laquelle il n'a pas été prévu de résonateur extérieur. La structure photoinduite 25 réalisant la déflexion du faisceau lumineux dans le guide d'onde plan photopolymère est formé de strates droites équidistantes disposées parallèlement à la direction de propagation du rayonnement émis par la source. Le rayonnement est diffracté par le réseau suivant un angle fonction du pas du réseau et des longueurs d'onde du rayonnement d'enregistrement et du rayonnement émis par la source laser. Comme dans le cas précédent, il existe des fractions du rayonnement diffractées dans d'autres directions.

Dans les applications précédemment décrites, le raccordement des fibres à la structure optique compacte n'a pas été précisément décrit. Ce raccordement peut être effectué selon des techniques telles que la gravure du silicium pour former un canal dans le substrat destiné à supporter la fibre, les angles d'attaque ainsi que la profondeur

9 0 006 052 10

d'attaque du silicium étant très précisément déterminés afin que le cœur de la fibre soit précisément positionné en hauteur par rapport au guide d'onde plan photopolymère. La fibre est alors fixée à l'intérieur de ce canal. Le photopolymère peut être déposé ensuite sans prendre de précautions particulières au niveau des raccordements des fibres, ou bien être déposé à travers un masque masquant les zones de raccordement. Une autre technique consiste à fixer l'extrémité de la fibre à raccorder dans un support puis à fixer ce support au substrat silicium de telle manière que le cœur de la fibre vienne au contact de la tranche du substrat, au niveau du guide d'onde.

L'invention n'est pas limitée aux modes de réalisation précédemment décrits pour mettre en évidence les caractéristiques de l'invention, et toutes les applications particulières utilisant une structure optique compacte à source intégrée comportant une couche de photopolymère déposée sur le substrat d'indice correct pour que cette couche de photopolymère forme guide d'onde après polymérisation et une couche superficielle dans laquelle des fonctions optiques fonctionnant par variation d'indice ou variation de relief, peuvent être photoinduites sont du domaine de l'invention. De plus certains détails pratiques de réalisation n'ont pas été précisément décrits, par exemple les électrodes de commande de la jonction émettrice ainsi que les électrodes de sortie des détecteurs. Ces électrodes sont obtenues de manière connue par métallisation d'or par exemple. Des rubans peuvent être prévus pour amener les électrodes au bord de la plaquette afin de faciliter la prise des contacts.

**Revendications**

1. Structure optique compacte à source intégrée, comportant une source à semiconducteur (3) intégrée destinée à émettre une onde optique, une plaquette comportant un substrat (1 et 2, 6), et une couche guide d'onde (4, 7) au contact avec une face de ce substrat, caractérisée en ce que cette couche (4, 7) est formée d'un photopolymère d'indice supérieur à celui de la couche (2, 6) sous-jacente du substrat, et qu'une couche supérieure (8, 9) au-dessus de la couche guide d'onde comporte des structures diffractantes (10, 11) photoinduites, la face émissive de la jonction de la source étant disposée de manière que l'onde soit guidée dans la couche guide d'onde et déviée par les structures diffractantes de la couche supérieure.

2. Structure optique selon la revendication 1, caractérisée en ce que pour former un laser semiconducteur à résonateur extérieur distribué, la couche supérieure (8, 9) comporte une structure optique diffractante (10, 11) formée de strates équidistantes parallèles aux surfaces d'onde, le pas des strates étant égal à k $\lambda$/2n où $\lambda$ est la longueur d'onde des photons émis, n l'indice du photopolymère et k un entier, de sorte qu'il y ait réflexion sur les strates, la face de la jonction émettrice opposée au réseau étant clivée.

3. Structure optique selon la revendication 2, caractérisée en ce que la structure diffractante (10, 11) est formée de strates droites (10, 12, 13, 24, 25, 41, 42, 43).

4. Structure optique selon la revendication 2, caractérisée en ce que la structure diffractante est formée de strates (50) équidistantes ayant un rayon de courbure déterminé pour compenser la divergence de l'onde.

5. Structure optique selon l'une quelconque des revendications 1 à 4, caractérisée en ce que la jonction émettrice est munie d'un dissipateur thermique (5), la face émissive de cette jonction étant couplée optiquement et mécaniquement au guide d'onde photopolymère plan par une colle d'indice convenable assurant la liaison entre cette face émissive et la tranche du substrat au niveau du guide d'onde plan.

6. Structure optique selon l'une quelconque des revendications 1 à 4, caractérisée en ce que le substrat (1 et 2) est formé d'un support silicium (1) sur lequel une couche de silice (2) a été déposée, cette couche de silice étant enlevée dans une zone sur laquelle est soudée la jonction émettrice de sorte que le support silicium joue le rôle de dissipateur thermique.

7. Structure optique selon la revendication 5, caractérisée en ce que la couche supérieure (8) est également une couche de photopolymère dans laquelle les structures diffractantes photoinduites sont formées par des variations d'indice.

8. Structure optique selon l'une quelconque des revendications 1 à 6, caractérisée en ce que la couche superficielle (9) est une couche de résine photosensible dans laquelle les structures diffractantes (11) sont des variations d'indice.

9. Structure optique selon l'une quelconque des revendications 1 à 6, caractérisée en ce que les structures photoinduites (11) sont traitées pour former des structures diffractantes en relief.

10. Structure optique selon l'une quelconque des revendications précédentes, caractérisée en ce qu'elle comporte au moins une structure diffractante formée de strates (13) équidistantes parallèles, obliques par rapport à la direction de propagation des photons dans le guide, l'épaisseur présentée par la structure au rayonnement étant ajustée pour que le rendement de diffraction ait une valeur déterminée, une telle structure fonctionnant en séparateur.

11. Structure optique selon l'une quelconque des revendications 1 à 9, caractérisée en ce qu'elle comporte au moins, une structure diffractante dont les strates forment un réseau zone (24), une telle structure fonctionnant en déflecteur ou en focalisateur selon que les zones sont équidistantes ou ont des longueurs et des espacements prédéterminés pour former une lentille zonée.

12. Structure optique selon l'une quelconque des renvidications 1 à 9, caractérisée en ce qu'elle comporte au moins une structure diffractante formée de strates (41, 42, 43) parallèles équidistantes, obliques par rapport à la direction d'émission, une telle structure fonctionnant en réflecteur, l'épaisseur présentée par la structure au rayonnement étant telle que le rendement de diffraction soit maximum.

**Claims**

1. Compact optical structure with integrated source, comprising an integrated semiconductor source (3) for emitting a light wave, a plate comprising a substrate (1 and 2, 6) and a waveguide layer (4, 7) in contact with a face of said substrate, characterized in that the waveguide layer (4, 7) is formed by a photopolymer whose refractive index is greater than that of the layer (2, 6) of the substrate therebelow, and that an upper layer (8, 9) disposed above the waveguide layer contains photoinduced diffraction structures (10, 11), the emission face of the junction of the source being so arranged that the light wave is guided in the waveguide layer and deflected by the diffraction structures of the upper layer.

2. Optical structure according to claim 1, characterized in that to form a semiconductor laser with external distributed resonator the upper layer (8, 9) contains an optical diffraction structure (10, 11) which is formed by equally spaced strips extending parallel to the wave surfaces whose step width is $k\lambda/2n$, where $\lambda$ is the wavelength of the emitted photons, n the refractive index of the photopolymer and k an integer, so that at the strips a reflection takes place, the face of the emitting junction opposite the diffraction grating being split.

3. Optical structure according to claim 2, characterized in that the diffraction structure (10, 11) is formed by straight strips (10, 12, 13, 24, 25, 41, 42, 43).

4. Optical structure according to claim 2, characterized in that the diffraction structure is formed by equally spaced strips (50) which have a radius of curvature which is so determined that the divergence of the light wave is compensated.

5. Optical structure according to any one of claims 1 to 4, characterized in that the emitting junction is provided with a thermal dissipator (5) and that the emitting surface of the junction is coupled optically and mechanically to the planar waveguide consisting of the photopolymer by means of an adhesive with adapted refractive index which ensures the connection between the emitting face and the layer of the substrate at the level of the planar waveguide.

6. Optical structure according to any one of claims 1 to 4, characterized in that the substrate (1 and 2) is formed from a silicon support body (1) on which a layer of silicon dioxide (2) is applied, said layer of silicon dioxide being removed in a zone on which the emitting junction is welded so that the support body consisting of silicon plays the part of the thermal dissipator.

7. Optical structure according to claim 5, characterized in that the upper layer (8) is also a photopolymer layer in which the photoinduced diffraction structures are formed by variation of the refractive index.

8. Optical structure according to any one claims 1 to 6, characterized in that the upper layer (9) is a layer of photosensitive resin in which the diffraction structures (11) are variations of the refractive index.

9. Optical structure according to any one of claims 1 to 6, characterized in that the photoinduced structures (11) are so treated that relief-like diffraction structures are formed.

10. Optical structure according to any one of the preceding claims, characterized in that at least one diffraction structure is provided in the form of equidistant parallel strips (13) which extend inclined with respect to the propagation direction of the photons in the waveguide layer, the thickness of the structure for the radiation being so set that the diffraction degree of effectiveness has a predetermined value so that such a structure acts as separating structure.

11. Optical structure according to any one of claims 1 to 9, characterized in that at least one diffraction structure is provided whose strips form a zone grating (24), said structure operating in deflecting or focusing manner, depending on whether the zones have equal spacings or predetermined lengths and intermediate spaces for forming a zone lens.

12. Optical structure according to any one of claims 1 to 9, characterized in that at least one diffraction structure is provided which is formed by parallel equidistant strips (41, 42, 43) which extend inclined with respect to the emission direction, such a structure operating as reflector and the thickness of the structure for the radiation being so dimensioned that the diffraction effect is a maximum.

**Patentansprüche**

1. Kompakte optische Struktur mit eingebauter Quelle, mit einer integrierten Halbleiterquelle (3) zum Aussenden einer Lichtwelle, einer Platte mit einem Substrat (1 und 2, 6) und einer mit einer Fläche des Substrats in Kontakt stehenden Wellenleiterschicht (4, 7), dadurch gekennzeichnet, daß die Wellenleiterschicht (4, 7) von einem Photopolymer gebildet ist, dessen Brechungsindex größer als der der darunterliegenden Schicht (2, 6) des Substrats ist, und daß eine über der Wellenleiterschicht befindliche Oberschicht (8, 9) photoinduzierte Beugungsstrukturen (10, 11) enthält, wobei die Abstrahlungsfläche des Übergangs der Quelle derart angeordnet ist, daß die Lichtwelle in der Wellenleiterschicht geführt und von den Beugungsstrukturen der Oberschicht abgelenkt wird.

2. Optische Struktur nach Anspruch 1, dadurch gekennzeichnet, daß zur Bildung eines Halbleiterlasers mit äußerem, verteiltem Resonator die Oberschicht (8, 9) eine optische Beugungsstruktur (10, 11) enthält, die von gleich weit voneinander entfernt liegenden, parallel zu den Wellenflächen verlaufende Streifen gebildet ist, deren Schrittweite kλ/2n ist, wobei λ die Wellenlänge der ausgesendeten Photonen, n der Brechungsindex des Photopolymers und k eine ganze Zahl ist, so daß an den Streifen eine Reflexion stattfindet, wobei die dem Beugungsgitter gegenüberliegende Fläche des strahlenden Übergangs gespalten ist.

3. Optische Struktur nach Anspruch 2, dadurch gekennzeichnet, daß die Beugungsstruktur (10, 11) von geraden Streifen (10, 12, 13, 24, 25, 41, 42, 43) gebildet ist.

4. Optische Struktur nach Anspruch 2, dadurch gekennzeichnet, daß die Beugungsstruktur von gleich weit voneinander entfernt liegenden Streifen (50) gebildet ist, die einen Krümmungsradius aufweisen, der so bestimmt ist, daß die Divergenz der Lichtwelle kompensiert wird.

5. Optische Struktur nach einem der Ansprüche 1 bis 4, dadurch gekennzeichnet, daß der strahlende Übergang mit einem Wärmeableitkörper (5) versehen ist und daß die Abstrahlungsfläche des Übergangs optisch und mechanisch an den aus dem Photopolymer bestehenden ebenen Wellenleiter mittels eines Klebstoffs mit passendem Brechungsindex angekoppelt ist, der die Verbindung zwischen der Abstrahlungsfläche und der Schicht des Substrats auf der Höbe des ebenen Wellenleiters gewährleistet.

6. Optische Struktur nach einem der Ansprüche 1 bis 4, dadurch gekennzeichnet, daß das Substrat (1 und 2) aus einem Siliciumträgerkörper (1) gebildet ist, auf dem eine Schicht aus Siliciumdioxid (2) aufgebracht ist, wobei diese Schicht aus Siliciumdioxid in einer Zone entfernt ist, auf der der strahlende Übergang so angeschweißt ist, daß der aus Silicium bestehende Trägerkörper die Rolle des Wärmeableitkörpers spielt.

7. Optische Struktur nach Anspruch 5, dadurch gekennzeichnet, daß die Oberschicht (8) ebenfalls eine Photopolymerschicht ist, in der die photoinduzierten Beugungsstrukturen durch Variationen des Brechungsindex gebildet sind.

8. Optische Struktur nach einem der Ansprüche 1 bis 6, dadurch gekennzeichnet, daß die Oberschicht (9) eine Schicht aus einem lichtempfindlichen Harz ist, in der die Beugungsstrukturen (11) Variationen des Brechungsindex sind.

9. Optische Struktur nach einem der Ansprüche 1 bis 6, dadurch gekennzeichnet, daß die photoinduzierten Strukturen (11) so behandelt sind, daß reliefartige Beugungsstrukturen entstehen.

10. Optische Struktur nach einem der vorhergehenden Ansprüche, dadurch gekennzeichnet, daß wenigstens eine Beugungsstruktur in Form gleich weit entfernter, paralleler Streifen (13) vorgesehen ist, die schräg bezüglich der Ausbreitungsrichtung der Photonen in der Wellenleiterschicht verlaufen, wobei die Dicke der Struktur für die Strahlung so eingestellt ist, daß der Beugungswirkungsgrad einen vorbestimmten Wert hat, so daß eine solche Struktur als Trennstruktur arbeitet.

11. Optische Struktur nach einem der Ansprüche 1 bis 9, dadurch gekennzeichnet, daß wenigstens eine Beugungsstruktur vorgesehen ist, deren Streifen ein Zonengitter (24) bilden, wobei diese Struktur ablenkend oder fokussierend arbeitet, je nachdem, ob die Zonen gleiche Abstände oder vorbestimmte Längen und Zwischenräume zur Bildung einer Zonenlinse aufweisen.

12. Optische Struktur nach einem der Ansprüche 1 bis 9, dadurch gekennzeichnet, daß wenigstens eine Beugungsstruktur vorgesehen ist, die von parallelen, gleich weit entfernten Streifen (41, 42, 43) gebildet ist, die schräg bezüglich der Abstrahlungsrichtung verlaufen, wobei eine solche Struktur als Reflektor arbeitet und die Dicke der Struktur für die Strahlung so gemessen ist, daß der Beugungswirkungsgrad maximal ist.

Fig. 1

Fig. 2

Fig. 3

Fig. 4

Fig. 5

Fig. 6

Fig. 7

Fig. 8

3

Fig. 9

Fig. 10

Fig. 11